(19) Europäisches Patentamt
European Patent Office
Office européen des brevets

(11) **EP 3 694 665 B1**

(12) **EUROPÄISCHE PATENTSCHRIFT**

(45) Veröffentlichungstag und Bekanntmachung des Hinweises auf die Patenterteilung:
**23.06.2021 Patentblatt 2021/25**

(21) Anmeldenummer: **19817212.4**

(22) Anmeldetag: **04.12.2019**

(51) Int Cl.:
**B23B 27/04** *(2006.01)*     **B23B 27/10** *(2006.01)*
**B23B 29/04** *(2006.01)*

(86) Internationale Anmeldenummer:
**PCT/EP2019/083584**

(87) Internationale Veröffentlichungsnummer:
**WO 2020/115088 (11.06.2020 Gazette 2020/24)**

(54) **SCHNEIDPLATTE UND WERKZEUG ZUR SPANENDEN BEARBEITUNG EINES WERKSTÜCKS**

CUTTING PLATE AND TOOL FOR MACHINING A WORKPIECE

PLAQUETTE DE COUPE ET OUTIL POUR L'USINAGE D'UNE PIÈCE PAR ENLÈVEMENT DE COPEAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2018 DE 102018130788**

(43) Veröffentlichungstag der Anmeldung:
**19.08.2020 Patentblatt 2020/34**

(73) Patentinhaber: **Hartmetall-Werkzeugfabrik Paul Horn GmbH**
**72072 Tübingen (DE)**

(72) Erfinder: **HENGER, Anna**
**72644 Oberboihingen (DE)**

(74) Vertreter: **Witte, Weller & Partner Patentanwälte mbB**
**Postfach 10 54 62**
**70047 Stuttgart (DE)**

(56) Entgegenhaltungen:
**EP-A1- 2 495 058     EP-A1- 2 878 403**
**EP-A1- 3 045 242**

**Beschreibung**

Die vorliegende Erfindung betrifft eine Schneidplatte für ein Werkzeug zur spanenden Bearbeitung eines Werkstücks. Des Weiteren betrifft die vorliegende Erfindung ein Werkzeug mit einem Werkzeughalter und einer an dem Werkzeughalter angeordneten erfindungsgemäßen Schneidplatte.

Die Erfindung betrifft insbesondere eine Schneidplatte für ein Werkzeug zum Ein- und Abstechdrehen. Besonders bevorzugt ist die erfindungsgemäße Schneidplatte zum Ein- und Abstechdrehen von Titan ausgelegt.

Eine Schneidplatte, die die Grundlage für den Oberbegriff des Anspruchs 1 bildet, ist aus der EP 3 045 242 A1 bekannt.

Werkzeuge zum Ein- und Abstechdrehen sind grundsätzlich bereits in einer Vielzahl bekannt. Ein beispielhaftes Werkzeug zum Ein- und Abstechdrehen ist in der DE 10 2011 016 148 A1 gezeigt.

Insbesondere beim Einstechdrehen ist es erforderlich, dass der abgehobene Span schmäler als die zu erzeugende Nutbreite ist. Andernfalls kollidiert der abgehobene Span seitlich mit den Nutflanken und beschädigt die Werkstückoberfläche. Der Span sollte daher nicht nur um seine Querachse, sondern auch um seine Längsachse aktiv eingeformt bzw. gekrümmt werden.

Das Ein- und Abstechdrehen von Titan und Titanlegierungen gestaltet sich aufgrund der Eigenschaften dieser Werkstoffe als besonders herausfordernd. Titan und Titanlegierungen weisen unter anderem eine sehr hohe Zähigkeit auf. Ein während der Drehbearbeitung abgehobener Span federt daher vergleichsweise stark auf. Um dies zu kompensieren, sollte der Span beim Ein- und Abstechdrehen von Titan und Titanlegierungen vergleichsweise stärker um seine Längsachse umgeformt werden als dies bei der Bearbeitung anderer Werkstoffe von Nöten ist.

Ein höherer Umformungsgrad des abgehobenen Spans ergibt einen schnelleren Spanbruch, was grundsätzlich von Vorteil ist. Gleichzeitig führt dies jedoch auch zu einer höheren Belastung des Schneidenbereichs bzw. der gesamten Schneidplatte. Dies wirkt sich negativ auf die Abnutzung und damit auf die Lebensdauer der Schneidplatte aus.

Des Weiteren hat Titan eine sehr geringe Wärmeleitfähigkeit, was zu einem hohen Wärmeeintrag in der Schneide führt. Normalerweise wird die Wärme auch teilweise durch Wärmeleitung über das Werkstück selbst abgeführt, bei geringer Wärmeleitfähigkeit bleibt die Energie jedoch im Bereich der Zerspanstelle und damit in Werkzeug und Span. Der abgehobene Span sollte daher vergleichsweise schnell abgeführt, also von der Schneide wegtransportiert werden.

Es ist daher eine Aufgabe der vorliegenden Erfindung, eine Schneidplatte bereitzustellen, welche sich insbesondere zum Ein- und Abstechdrehen von Titan und Titanlegierungen eignet und durch die sich die oben genannten technischen Randbedingungen einhalten lassen. Dabei ist es insbesondere eine Aufgabe, ein Gleichgewicht zwischen der geforderten Spanumformung und der damit einhergehenden Schneidenbelastung zu finden.

Diese Aufgabe wird gemäß einem Aspekt der vorliegenden Erfindung durch eine Schneidplatte gelöst, welche folgende Merkmale aufweist:

- eine Hauptschneidkante, die geradlinig ausgestaltet ist und sich zwischen einem ersten und einem gegenüberliegenden zweiten Ende erstreckt;

- eine erste Nebenschneidkante, die einen ersten geradlinigen Abschnitt und einen ersten konkav gekrümmten Abschnitt aufweist, wobei der erste geradlinige Abschnitt unmittelbar oder über einen Radius oder eine Fase mit dem ersten Ende der Hauptschneidkante verbunden ist;

- eine zweite Nebenschneidkante, die einen zweiten geradlinigen Abschnitt und einen zweiten konkav gekrümmten Abschnitt aufweist, wobei der zweite geradlinige Abschnitt unmittelbar oder über einen Radius oder eine Fase mit dem zweiten Ende der Hauptschneidkante verbunden ist; und

- eine Spanfläche, die eine Spanformgeometrie aufweist;

wobei die Hauptschneidkante, der erste geradlinige Abschnitt und der zweite geradlinige Abschnitt in einer gemeinsamen Schneidenebene angeordnet sind,
wobei die Hauptschneidkante mit dem ersten geradlinigen Abschnitt der ersten Nebenschneidkante und dem zweiten geradlinigen Abschnitt der zweiten Nebenschneidkante jeweils einen spitzen Winkel einschließt,
wobei die Spanfläche in einem vorderen Bereich, der seitlich durch den ersten geradlinigen Abschnitt der ersten Nebenschneidkante und den zweiten geradlinigen Abschnitt der zweiten Nebenschneidkante begrenzt wird, in Bezug auf die Schneidenebene nach unten zurückgesetzt ist und in jedem Querschnitt parallel zu der Hauptschneidkante einen Tiefpunkt aufweist, der einen gleich großen ersten Abstand von dem ersten geradlinigen Abschnitt und dem zweiten geradlinigen Abschnitt hat und im Vergleich zu den übrigen Punkten auf der Spanfläche in dem jeweiligen Querschnitt einen maximalen Abstand von der Schneidenebene hat,
wobei die Spanformgeometrie zumindest in einem hinteren Bereich der Spanfläche, der seitlich durch den ersten konkav gekrümmten Abschnitt und den zweiten konkav gekrümmten Abschnitt begrenzt wird, angeordnet ist und über die Schneidenebene hinaus nach oben hin absteht und zumindest zwei Erhöhungen aufweist, so dass die Spanfläche in dem hinteren Bereich in einem weiteren Querschnitt parallel zu der Hauptschneidkante zwei Hochpunkte und einen dazwischen liegenden zweiten Tiefpunkt aufweist, der einen gleich großen dritten Abstand von dem ersten konkav gekrümmten Abschnitt und dem zweiten konkav gekrümmten Abschnitt hat, und wobei ein Spanwinkel entlang der Hauptschneidkante derart variiert, dass der Spanwinkel $\gamma 1$ an einem Mittelpunkt der Hauptschneidkante, der einen gleich großen zweiten Abstand von dem ersten und dem zweiten Ende der Hauptschneidkante hat, größer als der Spanwinkel $\gamma 2$ im Bereich des ersten und/oder zweiten Endes ist.

Gemäß einem weiteren Aspekt der vorliegenden Erfindung wird die oben genannte Aufgabe durch ein Werkzeug gelöst, das einen Werkzeughalter und eine an dem Werkzeughalter angeordnete Schneidplatte der zuvor genannten Art aufweist.

Die geradlinig (ungekrümmt) ausgestaltete Hauptschneidkante der erfindungsgemäßen Schneidplatte ist an ihren beiden Enden jeweils direkt, über einen Radius und/oder über eine Fase mit jeweils einer Nebenschneidkante verbunden. Jede der beiden Nebenschneidkanten (vorliegend "erste und zweite Nebenschneidkanten" genannt) weisen jeweils einen geradlinigen (ungekrümmten) Abschnitt sowie einen konkav gekrümmten Abschnitt auf. Je nach Ausführungsform kann der konkav gekrümmte Abschnitt unmittelbar an den geradlinigen Abschnitt der jeweiligen Schneidkante angrenzen. Alternativ dazu kann zwischen dem geradlinigen Abschnitt und dem konkav gekrümmten Abschnitt der jeweiligen Schneidkante auch ein weiteres Formelement als Übergang bzw. Verbindungsstück vorgesehen sein.

Mit Hilfe der geradlinig ausgestalteten Hauptschneidkante lässt sich bspw. beim Einstechdrehen ein ebener Nutgrund erzeugen. Ferner lässt sich das Werkstück auch mit Hilfe der beiden Nebenschneidkanten bearbeiten.

Die geradlinigen Abschnitte der beiden Nebenschneidkanten sind bevorzugt in einer gemeinsamen Ebene mit der Hauptschneidkante angeordnet. Diese Ebene wird vorliegend als "Schneidenebene" bezeichnet. Das Anordnen der geradlinigen Abschnitte der Nebenschneidkanten in einer gemeinsamen Ebene mit der Hauptschneidkante ermöglicht neben dem Einstechdrehen auch eine Längsdrehbearbeitung. Beispielsweise lässt sich das Werkstück mit Hilfe der geradlinigen Abschnitte der Nebenschneidkanten anfasen.

Sofern die beiden Nebenschneidkanten jeweils über einen Radius und/oder eine Fase mit der Hauptschneidkante verbunden sind, ist es bevorzugt, dass auch diese Radien und/oder Fasen in der genannten Schneidenebene angeordnet sind.

Zwischen den geradlinigen Abschnitten der Nebenschneidkanten und der Hauptschneidkante ergibt sich jeweils ein spitzer Winkel a, der sich innerhalb der Schneidenebene messen lässt. Für diesen Winkel gilt vorzugsweise $70° < \alpha < 90°$, besonders bevorzugt $80° < \alpha < 90°$. Dieser seitliche Freiwinkel verhindert während des Einstechdrehens eine unerwünschte Berührung bzw. Kollision der Nebenschneidkanten mit den Nutflanken.

Die Spanfläche der erfindungsgemäßen Schneidplatte lässt sich grundsätzlich in zwei Teilbereiche aufteilen. Diese beiden Teilbereiche werden vorliegend als "vorderer Bereich" und "hinterer Bereich" bezeichnet, da der vordere Bereich einen kürzeren Abstand zu der Hauptschneidkante als der hintere Bereich hat. Als vorderer Bereich wird vorliegend insbesondere der Bereich der Spanfläche bezeichnet, der seitlich durch die geradlinigen Abschnitte der beiden Nebenschneidkanten begrenzt wird. Dieser vordere Bereich der Spanfläche grenzt vorzugsweise unmittelbar an die Hauptschneidkante an. Als hinterer Bereich wird vorliegend der Bereich der Spanfläche bezeichnet, der seitlich durch die beiden konkav gekrümmten Abschnitte der Nebenschneidkanten begrenzt wird.

Im vorderen Bereich ist die Spanfläche in Bezug auf die Schneidenebene nach unten zurückgesetzt. Die Spanfläche bildet hier eine Art Mulde, welche allgemein auch als Vertiefung bezeichnet werden kann. In jedem Querschnitt parallel zu der Hauptschneidkante weist die Spanfläche in diesem vorderen Bereich einen Tiefpunkt auf, der einen vergleichsweise maximalen Abstand von der Schneidenebene hat. Dieser Tiefpunkt ist vorzugsweise mittig angeordnet. Der Tiefpunkt hat also in jedem der Querschnitte einen gleich großen Abstand von dem ersten geradlinigen Abschnitt und dem zweiten geradlinigen Abschnitt. Es sei jedoch darauf hingewiesen, dass es neben diesem mittig angeordneten Tiefpunkt auch weitere Tiefpunkte im vorderen Bereich der Spanfläche geben kann. Zwar ist hier vorzugsweise nur ein Tiefpunkt pro Querschnitt (Querschnitt parallel zu der Hauptschneidkante) vorgesehen. Grundsätzlich könnte die Spanfläche aber auch annähernd U-förmig ausgestaltet sein, so dass sich der genannte Tiefpunkt nicht als einzelner Punkt sondern mittig angeordnete Gerade innerhalb des jeweiligen Querschnitts ergeben würde.

Die Spanfläche weist eine Spanformgeometrie auf, die in dem hinteren Bereich über die Schneidenebene nach oben hinaus absteht. Die Spanformgeometrie ist in dem hinteren Bereich als erhabene Struktur ausgebildet. Sie bildet eine relative Erhöhung.

Die Spanformgeometrie sorgt vorzugsweise für ein schnelleres Einrollen des Spans quer zur Spanlängsachse, um diesen schneller zu brechen. Gleichzeitig ist die Spanformgeometrie vorzugsweise dazu ausgestaltet, den Span seitlich, also längs der Spanlängsachse einzurollen, um die Spanbreite zu verringern und Kollisionen mit den am Werkstück erzeugten Nutflanken zu vermeiden. Die seitliche Spanformung erfolgt vorzugsweise in den Bereichen unmittelbar nach der Hauptschneidkante (d.h. im vorderen Bereich), wo sich das Material zumindest teilweise plastisch verhält. Spätestens 0,5 mm nach der Schneidkante ist die seitliche Umformung typischerweise weitgehend abgeschlossen. Die Spanformgeometrie weist die erzeugte Spanrolle zudem von etwaigen Spannelementen der Schneidplatte ab.

Der Querschnitt (parallel zu der Hauptschneidkante) in dem hinteren Bereich der Spanfläche wird vorliegend als "weiterer Querschnitt" bezeichnet. Dies dient lediglich zur Differenzierung von dem parallel dazu angeordneten Querschnitt in dem vorderen Bereich der Spanfläche.

Vorzugsweise hat die Spanformgeometrie in dem hinteren Bereich der Spanfläche in jedem (weiteren) Querschnitt parallel zu der Hauptschneidkante zwei Hochpunkte und einen dazwischen liegenden Tiefpunkt (bezeichnet als "zweiter Tiefpunkt"). Dies führt im (weiteren) Querschnitt zu einer Art Wellenform. Aufgrund dieser Form wird der Span in der Mulde, welche sich zwischen den beiden Hochpunkten und dem zweiten Tiefpunkt ergibt, seitlich geführt, wodurch Spanbreite des Spans, der bereits im vorderen Bereich der Spanfläche seitlich eingerollt wurde, erhalten bleibt oder sogar weiter verringert wird.

Die zwischen den beiden Hochpunkten entstehende Mulde im hinteren Bereich der Spanfläche führt die Spanrolle also seitlich. Dies führt insbesondere bei der Bearbeitung von Titan und Titanlegierungen zu einer optimalen Spanbildung.

Ein weiteres Merkmal der erfindungsgemäßen Schneidplatte besteht darin, dass der Spanwinkel entlang der Hauptschneidkante variiert. An verschiedenen Punkten der Hauptschneidkante treten also verschiedene Spanwinkel auf. Dieser Spanwinkel wird in jedem Punkt der Hauptschneidkante, wie üblich, zwischen der Schneidenebene und der Spanfläche gemessen. Der Spanwinkel bezeichnet demnach den Winkel, mit dem die Spanfläche ausgehend von der Hauptschneidkante gegenüber der Schneidenebene abfällt. Es versteht sich, dass ein entsprechender Spanwinkel auch an den Nebenschneidkanten der Schneidplatte auftreten kann.

Der Spanwinkel entlang der Hauptschneidkante variiert vorzugsweise derart, dass der Spanwinkel $\gamma 1$ in der Mitte der Hauptschneidkante (gleicher Abstand zu beiden Enden der Hauptschneidkante) größer als der Spanwinkel $\gamma 2$ im Bereich der beiden Enden ist. Der Spanwinkel $\gamma$ nimmt entlang der Hauptschneidkante also von innen nach außen hin ab.

Ein vergleichsweise geringer Spanwinkel an den beiden Enden der Hauptschneidkante, also in den Schneidenecken, stabilisiert die Schneidenecken, welche typischerweise zu den höchstbelasteten Bereichen einer zum Einstechdrehen verwendeten Schneidplatte gehören. Umgekehrt hat ein vergleichsweise großer Spanwinkel in der Mitte der Hauptschneidkante den Vorteil, dass hierdurch der Span sich derart formen lässt, dass dieser sich in seiner Breite (Spanbreite) verjüngt.

Die oben genannte Aufgabe ist somit vollständig gelöst.

Gemäß einer Ausgestaltung der vorliegenden Erfindung variiert der Spanwinkel entlang der Hauptschneidkante derart, dass der Spanwinkel ausgehend von dem Mittelpunkt der Hauptschneidkante jeweils zum ersten Ende und zum zweiten Ende hin monoton abnimmt.

Der Spanwinkel kann entlang der Hauptschneidkante ausgehend von dem Mittelpunkt zu den beiden Enden der Hauptschneidkante hin auch streng monoton abnehmen. Dies muss jedoch nicht zwangsläufig der Fall sein. Vorzugsweise ist die Abnahme des Spanwinkels ausgehend von dem Mittelpunkt hin zu beiden Enden symmetrisch bezüglich des Mittelpunkts der Hauptschneidkante. Der Spanwinkel nimmt ausgehend von dem Mittelpunkt der Hauptschneidkante zu dem ersten Ende hin also in gleicher Weise ab wie ausgehend von dem Mittelpunkt der Hauptschneidkante zu dem zweiten Ende hin. Dies sorgt für eine gewünschte symmetrische Verjüngung des Spans in dessen Spanbreite.

Gemäß einer weiteren Ausgestaltung gilt für den Spanwinkel ferner:

$5° \leq \gamma 2 \leq \gamma 1 \leq 30°$

Diese Grenzen ergeben sich insbesondere dadurch, dass bei einem Spanwinkel $\gamma > 30°$ die Hauptschneidkante zu instabil werden würde. Umgekehrt würde ein Spanwinkel $\gamma < 5°$ zu einer vergleichsweise stumpfen Schneidkante führen. Der Spanwinkel $\gamma 2$ sollte daher in dem Bereich der beiden Enden der Hauptschneidkante nicht kleiner als 5° sein. Am Mittelpunkt der Hauptschneidkante sollte der Spanwinkel $\gamma 1$ auch nicht größer als 30° sein.

Gemäß einer weiteren Ausgestaltung gilt ferner:

$$0,8 \geq \frac{\gamma 2}{\gamma 1} \geq 0,16.$$

Der Betrag des Spanwinkels $\gamma 2$ an den beiden äußeren Enden der Hauptschneidkante ist also im Bereich von 16 % - 80 % des Betrags des Spanwinkels $\gamma 1$ im Mittelpunkt der Hauptschneidkante.

Gemäß einer weiteren Ausgestaltung variiert ein Nebenschneidkanten-Spanwinkel entlang der ersten Nebenschneidkante derart, dass der Nebenschneidkanten-Spanwinkel entlang der ersten Nebenschneidkante mit zunehmendem Abstand von der Hauptschneidkante monoton abnimmt.

Diese monotone Abnahme gilt vorzugsweise sowohl für den ersten geradlinigen Abschnitt als auch für den ersten konkav gekrümmten Abschnitt der ersten Nebenschneidkante. Die entsprechende Einschränkung bezüglich der monotonen Abnahme des Nebenschneidkanten-Spanwinkels gilt vorzugsweise auch entsprechend für die zweite Nebenschneidkante (Also: Der Nebenschneidkanten-Spanwinkel variiert vorzugsweise entlang der zweiten Nebenschneidkante derart, dass der Nebenschneidkanten-Spanwinkel entlang der zweiten Nebenschneidkante mit zunehmendem Abstand von der Hauptschneidkante monoton abnimmt).

Durch dieses Variieren des Spanwinkels entlang der beiden Nebenschneidkanten lässt sich wiederum die Spanbildung und Spanformung entsprechend vorteilhaft steuern. Durch den definierten Nebenschneidkanten-Spanwinkel entlang der Nebenschneidkanten erhält man auch an den Nebenschneidkanten einen definierten Schneidkeil, der eine spanende Bearbeitung

Gemäß einer weiteren Ausgestaltung ist der Nebenschneidkanten-Spanwinkel entlang des ersten geradlinigen Abschnitts der ersten Nebenschneidkante konstant. Ebenso ist der Nebenschneidkanten-Spanwinkel entlang des zweiten geradlinigen Abschnitts der zweiten Nebenschneidkante in dieser Ausgestaltung konstant.

Der Nebenschneidkanten-Spanwinkel nimmt in dieser Ausgestaltung vorzugsweise erst entlang des ersten bzw. zweiten konkav gekrümmten Abschnitts der ersten bzw. zweiten Nebenschneidkante ab. Dies ist insbesondere bei kleineren Stechbreiten, also kürzeren Hauptschneidkanten, von Vorteil, da die Spanfläche dann in ihrem vorderen Bereich nicht allzu stark gekrümmt wird. Andernfalls könnte auch dies zu einer vergleichsweise hohen Belastung der Spanfläche führen.

Gemäß einer weiteren Ausgestaltung ist die Spanfläche als stetige Freiformfläche ausgebildet.

Dies hat den Vorteil, dass der Span ohne Störungen über die Spanfläche ablaufen kann. Der Span stößt dabei nicht an unstetigen Erhöhungen oder Vertiefungen an, sondern wird sanft umgelenkt. Dies verringert die Belastung der Schneidplatte.

Die Spanfläche kann bspw. als bikubische Fläche, welche sowohl in Längs- als auch in Querrichtung kubisch interpoliert ist, ausgestaltet sein. Der Spanwinkel kann in einem solchen Fall bspw. entlang der Hauptschneide mit einer quadratischen Interpolation variieren, wobei der Spanwinkel wie bereits erwähnt, von dem Mittelpunkt der Hauptschneidkante nach außen zu seinen beiden Enden hin jeweils quadratisch abnimmt.

Grundsätzlich kann die als Freiformfläche ausgebildete Spanfläche durch eine Interpolation höherer als nur quadratischer Ordnung ausgebildet sein.

Gemäß einer weiteren Ausgestaltung ist die Spanfläche spiegelsymmetrisch zu einer Spiegelebene, die durch den Mittelpunkt der Hauptschneidkante verläuft und orthogonal zu der Hauptschneidkante ausgerichtet ist.

Dies führt zu einer symmetrischen Verformung des Spans, was eine vergleichsweise vorteilhafte Spanabfuhr ermöglicht.

Gemäß einer weiteren Ausgestaltung grenzt die Spanfläche unmittelbar an die Hauptschneidkante, die erste Nebenschneidkante und die zweite Nebenschneidkante an.

Dies ermöglicht eine maximale Ausnutzung sowohl in Längs- als auch Querrichtung der Spanfläche. Zwischen der Spanfläche und den jeweiligen Schneidkanten (Hauptschneidkante, erste und zweite Nebenschneidkante) kann jedoch auch jeweils eine Übergangsfläche angeordnet sein, so dass die Spanfläche nicht zwangsläufig unmittelbar an die jeweiligen Schneidkanten angrenzen muss.

Gemäß einer weiteren Ausgestaltung steht die Spanfläche in dem gesamten hinteren Bereich in Bezug auf die Schneidenebene nach oben hin ab.

Mit anderen Worten hat die Spanfläche ab dem Übergang von den geradlinigen Abschnitten der Nebenschneidkanten zu den konkav gekrümmten Abschnitten der Nebenschneidkanten eine erhabene Struktur, die gegenüber der Schneidenebene nach oben hin absteht. Dies führt zu einem vergleichsweise schnellen Bruch des Spans, so dass eine unerwünscht lange Spanbildung wirksam vermieden wird.

Vorzugsweise steht die Spanformgeometrie der Spanfläche bis zu einer Höhe *h* über die Schneidenebene ab und die Hauptschneidkante weist eine Länge *l* auf, wobei gilt:

$$0,6 * l \geq h \geq 0,1 * l.$$

Die Höhe *h* der Spanformgeometrie wird also vorzugsweise in Abhängigkeit der Länge *l* der Hauptschneidkante gewählt. Besonders bevorzugt gilt:

$$0,3 * l \geq h \geq 0,2 * l.$$

Gemäß einer weiteren Ausgestaltung ist die Spanfläche in jedem Längsschnitt orthogonal zu der Hauptschneidkante (d.h. in allen Längsschnitten orthogonal zu der Hauptschneidkante) konkav ausgestaltet.

Die Krümmung der Spanfläche kann je nach Längsschnitt unterschiedlich sein, grundsätzlich ist die Spanfläche in jedem der parallel zueinander ausgerichteten Längsschnitte, welche orthogonal zu der Hauptschneidkante sind, konkav ausgestaltet. Somit wird die gesamte Tiefe bzw. Länge der Spanfläche ausgenutzt. Wäre die Spanfläche nicht in jedem Längsschnitt konkav gekrümmt, würde der Span in manchen Bereichen der Spanfläche ansonsten die hinteren Bereiche gar nicht mehr kontaktieren.

Gemäß einer weiteren Ausgestaltung der vorliegenden Erfindung ist der erste konkav gekrümmte Abschnitt gleich lang oder länger als der erste geradlinige Abschnitt, und der zweite konkav gekrümmte Abschnitt ist gleich lang oder länger als der zweite geradlinige Abschnitt.

Der besagte hintere Bereich der Spanfläche, in dem die Spanformgeometrie angeordnet ist, ist demnach vorzugsweise größer ausgestaltet als der vordere Bereich der Spanfläche. Selbst bei den oben genannten Höhenverhältnissen der Spanformgeometrie ist es daher nicht notwendig, dass die beiden konkav gekrümmte Abschnitte der Nebenschneidkanten und der hintere Bereich der Spanfläche zu stark gekrümmt werden müssen. Somit lässt sich eine relativ sanfte und gleichmäßige Spanumformung ermöglichen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, oder den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen.

Fig. 1      eine perspektivische Ansicht eines Werkzeugs gemäß einem Ausführungsbeispiel der vorliegenden Erfindung;

Fig. 2      eine perspektivische Ansicht einer Schneidplatte gemäß einem Ausführungsbeispiel der vorliegenden Erfindung;

Fig. 3      eine perspektivische Ansicht eines Details der in Fig. 2 gezeigten Schneidplatte;

Fig. 4      eine Seitenansicht des in Fig. 3 gezeigten Details;

Fig. 5      eine Draufsicht von oben auf das in Fig. 3 gezeigte Detail der erfindungsgemäßen Schneidplatte;

Fig. 6      eine Draufsicht von vorne auf das in Fig. 3 gezeigte Detail der erfindungsgemäßen Schneidplatte;

Fig. 7      eine teilweise transparente Ansicht des in Fig. 3 gezeigten Details in einer Draufsicht;

Fig. 8      eine Verteilung des Spanwinkels bzw. des Nebenschneidkanten-Spanwinkels gemäß einem Ausführungsbeispiel der vorliegenden Erfindung;

Fig. 9      einen ersten Längsschnitt durch das in Fig. 3 gezeigte Detail der erfindungsgemäßen Schneidplatte;

Fig. 10      einen zweiten Längsschnitt durch das in Fig. 3 gezeigte Detail der erfindungsgemäßen Schneidplatte;

Fig. 11      einen ersten Querschnitt durch das in Fig. 3 gezeigte Detail der erfindungsgemäßen Schneidplatte; und

Fig. 12      einen zweiten Querschnitt durch das in Fig. 3 gezeigte Detail der erfindungsgemäßen Schneidplatte.

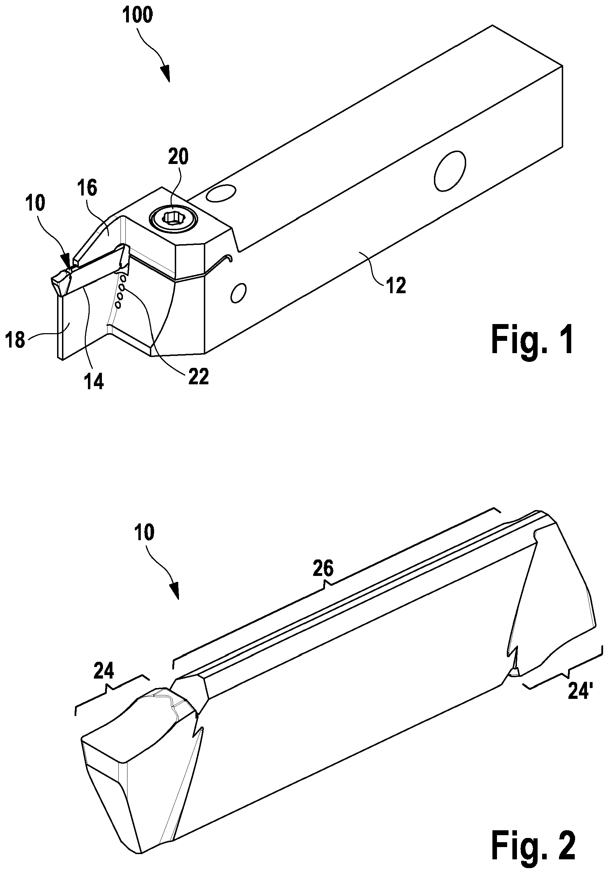

Fig. 1 zeigt eine perspektivische Ansicht eines Ausführungsbeispiels des erfindungsgemäßen Werkzeugs. Das Werkzeug ist darin in seiner Gesamtheit mit der Bezugsziffer 100 gekennzeichnet.

Das Werkzeug 100 ist als Drehwerkzeug ausgestaltet. Es eignet sich insbesondere zum Ein- und Abstechdrehen. Das Werkzeug 100 weist eine Schneidplatte 10 und einen Werkzeughalter 12 auf. Die Schneidplatte 10 lässt sich in diesem Fall lösbar an dem Werkzeughalter 12 befestigen. Hierzu weist der Werkzeughalter 12 eine Schneidplattenaufnahme 14 zur Aufnahme der Schneidplatte 10 auf.

Die Schneidplattenaufnahme 14 ist in diesem Ausführungsbeispiel durch eine obere Klemmbacke 16 und eine gegenüberliegende, untere Klemmbacke 18 definiert. Die Schneidplatte 10 lässt sich zwischen der oberen Klemmbacke 16 und der unteren Klemmbacke 18 einspannen.

In dem vorliegend gezeigten Ausführungsbeispiel weist der Werkzeughalter 12 ferner ein Befestigungselement 20 auf, das als Schraube ausgestaltet ist. Die Schraube 20 greift in ein entsprechendes Gewinde im Halter 12 ein. Durch Anziehen der Schraube 20 lässt sich die obere Klemmbacke 16 auf die untere Klemmbacke 18 zubewegen, wodurch die Schneidplatte 10 in der Schneidplattenaufnahme 14 fixiert wird.

Im Bereich der Schneidplattenaufnahme 14 sind gemäß dem in Fig. 1 gezeigten Ausführungsbeispiel ferner noch mehrere Kühlmittelaustritte 22 sichtbar. Durch diese Kühlmittelaustritte 22 gelangt Kühl- und Schmiermittel, welches durch entsprechende Kanäle im Inneren des Werkzeughalters 12 geführt wird, in den Bereich der Bearbeitungsstelle des Werkstücks.

Es sei darauf hingewiesen, dass das in Fig. 1 gezeigte Ausführungsbeispiel lediglich eines von einer Vielzahl möglicher Ausführungsbeispiele ist. Insbesondere die Ausgestaltung und Form des Werkzeughalters 12 ist frei variierbar. Anstelle eines wie in Fig. 1 dargestellten balkenförmigen Werkzeughalters 12 kann der Werkzeughalter grundsätzlich auch in Form eines Stechschwerts, bspw. in der Art, wie sie in der DE 10 2017 103 520 A1 gezeigt ist, ausgestaltet sein. Diverse weitere Ausgestaltungen des Werkzeughalters 12 sind denkbar. Auch die Art der hier gezeigten Einspannung der Schneidplatte 10 lässt sich grundlegend anders realisieren, ohne den Rahmen der vorliegenden Erfindung zu verlassen. Beispielsweise muss nicht zwangsläufig eine Schraube 20 als Befestigungselement verwendet werden. Grundsätzlich sind auch andere Spannelemente zur Einspannung der Schneidplatte 10 am Werkzeughalter 12 denkbar. Ebenso wäre es denkbar, die obere und untere Klemmbacke 16, 18 als selbstklemmend auszugestalten, so dass gänzlich auf ein Extraspannelement verzichtet werden kann. Die Kühlmittelaustritte 22 sind vorteilhaft, müssen aber ebenso nicht zwangsläufig vorhanden sein. Alternativ dazu können die Kühlmittelaustritte auch an anderen Stellen aus dem Werkzeughalter 12 austreten. All diese Variationen/Abwandlungen sind möglich, ohne den Rahmen der vorliegenden Erfindung zu verlassen.

Fig. 2 zeigt ein Ausführungsbeispiel der Schneidplatte 10 in einer perspektivischen Ansicht. Die Schneidplatte 10 ist vorliegend als Wendeschneidplatte ausgestaltet und weist demnach zwei identisch ausgestaltete Schneidenbereiche 24, 24' auf. Die Schneidplatte 10 lässt sich somit zweifach einsetzen. Sobald der Schneidenbereich 24 verschlissen ist, lässt sich die Schneidplatte 10 vom Werkzeughalter 12 lösen, um 180° wenden und dann erneut am Werkzeughalter 12 fixieren, so dass dann der zweite Schneidenbereich 24' einsetzbar ist.

Die Schneidplatte 10 muss jedoch nicht derart symmetrisch als Wendeschneidplatte ausgestaltet sein. Grundsätzlich genügt auch das Vorsehen von nur einem der beiden Schneidenbereiche 24, 24'. Umgekehrt ist auch das Vorsehen von mehr als zwei Schneidenbereichen möglich, beispielsweise bei drei-oder mehrschneidigen Schneidplatten. Zwischen den beiden Schneidenbereichen 24, 24' weist die Schneidplatte 10 in dem vorliegenden Ausführungsbeispiel einen Einspannabschnitt 26 auf. Dieser Einspannabschnitt 26 ist im Querschnitt meist vorzugsweise prismatisch ausgestaltet. Er dient der Einspannung der Schneidplatte 10 in der Schneidplattenaufnahme 14. Meist weist der Einspannabschnitt 26 hierzu mehrere Anlageflächen auf, die an entsprechenden Anlageflächen, welche in der Schneidplattenaufnahme 14 des Werkzeughalters 12 vorgesehen sind, anliegen.

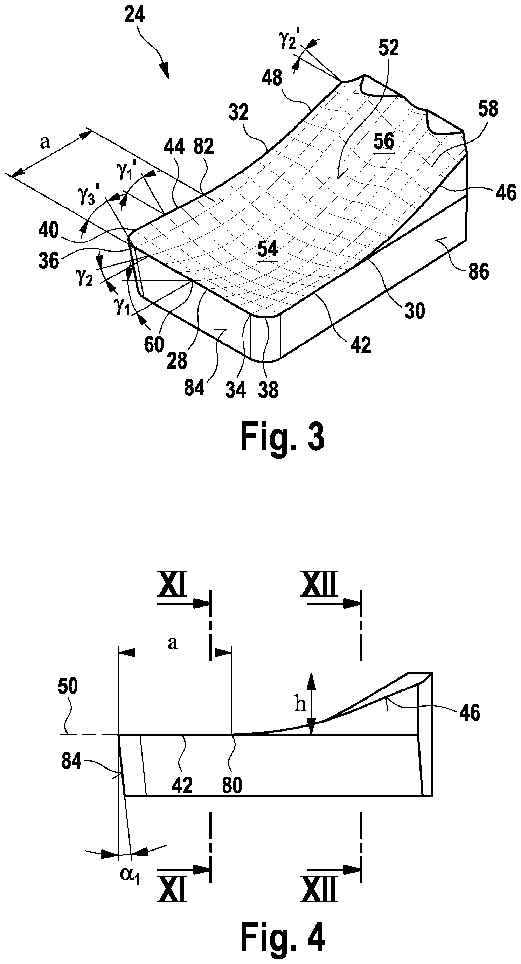

Fig. 3-7 zeigen den Schneidenbereich 24 der Schneidplatte 10 im Detail in unterschiedlichen Ansichten (perspektivisch, von der Seite, von oben und von vorne). Wie daraus ersichtlich ist, weist die Schneidplatte 10 eine Hauptschneidkante 28 sowie zwei quer dazu verlaufende Nebenschneidkanten 30, 32 auf. Die Nebenschneidkanten 30, 32 werden vorliegend zu deren besserer Differenzierung also erste Nebenschneidkante 30 und zweite Nebenschneidkante 32 bezeichnet.

Ein erstes Ende 34 der Hauptschneidkante 28 ist über einen ersten Radius 38 mit der ersten Nebenschneidkante 30 verbunden. Ein gegenüberliegendes zweites Ende 36 der Hauptschneidkante 28 ist über einen zweiten Radius 40 mit der zweiten Nebenschneidkante 32 verbunden. Anstelle der Radien 38, 40 wären grundsätzlich auch Fasen oder Kombinationen von Fasen und Radien als Verbindungsstücke zwischen der Hauptschneidkante 28 und den Nebenschneidkanten 30, 32 denkbar. Grundsätzlich ließen sich die Nebenschneidkanten 30, 32 auch unmittelbar mit der Hauptschneidkante 28 verbinden, so dass in den Ecken der Schneidplatte bzw. des Schneidenbereiches 24 dann tatsächlich scharfe Ecken entstehen würden.

Die Hauptschneidkante 28 ist vorzugsweise als geradlinige bzw. ungekrümmte Schneidkante ausgestaltet. Die beiden Nebenschneidkanten 30, 32 sind hingegen zumindest teilweise gekrümmt ausgestaltet. Beide Nebenschneidkanten 30, 32 weisen jeweils einen geradlinigen Abschnitt 42, 44 und einen konkav gekrümmten Abschnitt 46, 48 auf. Der geradlinige Abschnitt 42 der ersten Nebenschneidkante 30 wird vorliegend als erster geradliniger Abschnitt 42 bezeichnet. Der geradlinige Abschnitt 44 der zweiten Nebenschneidkante 32 wird vorliegend als zweiter geradliniger Abschnitt 44 bezeichnet. Der erste konkav gekrümmte Abschnitt 46 der ersten Nebenschneidkante 30 wird vorliegend als erster konkav gekrümmter Abschnitt 46 bezeichnet. Der konkav gekrümmte Abschnitt 48 der zweiten Nebenschneidkante 32 wird vorliegend als zweiter konkav gekrümmter Abschnitt 48 bezeichnet.

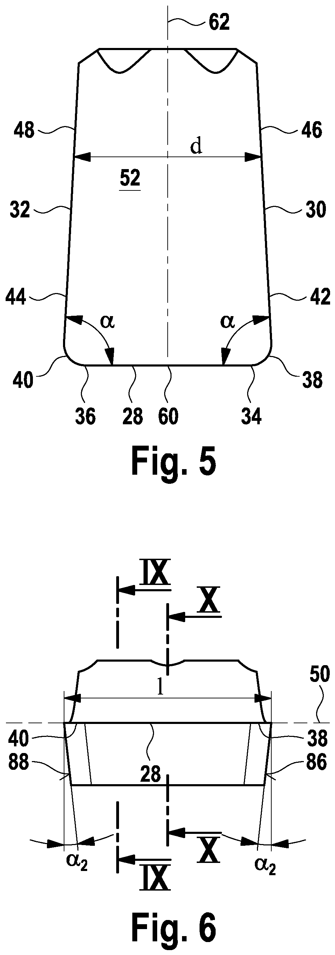

Die beiden geradlinigen Abschnitte 42, 44 bilden jeweils den vorderen Teil der jeweiligen Nebenschneidkante 30, 32. Die geradlinigen Abschnitte 42, 44 sind über die Radien 38, 40, über entsprechende Fasen oder unmittelbar mit der Hauptschneidkante 28 verbunden. Die beiden gekrümmten Abschnitte 46, 48 bilden jeweils den hinteren Bereich der jeweiligen Nebenschneidkante 32. Die konkav gekrümmten Abschnitte 46, 48 schließen sich vorzugsweise unmittelbar an die jeweiligen geradlinigen Abschnitte 42, 44 an. Grundsätzlich könnten zwischen den geraden und gekrümmten Abschnitten 42, 46 bzw. 44, 48 der beiden Nebenschneidkanten 30, 32 auch andere Formelemente als jeweilige Übergänge vorhanden sein. Gemäß des in Fig. 3 gezeigten bevorzugten Ausführungsbeispiels gehen die geradlinigen Abschnitte 42, 44 jedoch jeweils unmittelbar und tangential in die konkav gekrümmten Abschnitte 46, 48 über. Wie bspw. aus Fig. 4 und 6 ersichtlich ist, sind die Hauptschneidkante 28, der erste geradlinige Abschnitt 42 und der zweite geradlinige Abschnitt 44 in einer gemeinsamen Schneidenebene angeordnet. Diese Schneidenebene 50 ist in Fig. 4 und 6 als gestrichelte Linie eingezeichnet und mit der Bezugsziffer 50 versehen. Die Eckenradien 38, 40 sind vorzugsweise ebenfalls in dieser Schneidenebene 50 angeordnet. Der Radius der beiden Radien 38, 40 ist vorzugsweise gleich groß und beträgt maximal 50% der Breite der Hauptschneidkante 28 (gemessen zwischen dem ersten und zweiten Ende 34, 36) oder 25% der Gesamtbreite $l$. Im Falle von Fasen anstelle der Radien 38, 40 wären auch diese vorzugsweise in der Schneidenebene 50 angeordnet. Ein Anordnen der Hauptschneidkante 28 in einer gemeinsamen Schneidenebene 50 zusammen mit dem ersten und dem zweiten geradlinigen Abschnitt 42, 44 hat insbesondere den Vorteil, dass dies auch ein Längsdrehen unter Verwendung der Nebenschneidkanten 30, 32 ermöglicht.

Die Nebenschneidkanten 30, 32, genauer gesagt deren geradlinige Abschnitte 42, 44, verlaufen vorzugsweise nicht orthogonal, sondern unter einem spitzen Winkel $\alpha$ (siehe Fig. 5) zu der Hauptschneidkante 28. Der Schneiden- bzw. Freiwinkel $\alpha$ ist vorzugsweise im Bereich von 70°-90° bemessen, bevorzugt im Bereich von 80°-90° bemessen. In dem vorliegend bezeigten Ausführungsbeispiel ist der Winkel $\alpha$ mit 87° gemessen. Der spitze Winkel $\alpha$ verhindert bei der Stechbearbeitung, bspw. während der Einstechdrehens, unerwünschte Berührungen der Nebenschneidkanten 30, 32 mit den am Werkstück entstehenden Nutflanken. Aufgrund des spitzen Winkels $\alpha$ wird ein Nebenschneidkanten-Abstand d zwischen dem ersten konkav gekrümmten Abschnitt 46 und dem zweiten konkav gekrümmten Abschnitt 48 mit zunehmendem Abstand von der Hauptschneidkante 28 kleiner. Es sei darauf hingewiesen, dass anders als in Fig. 5 dargestellt, die beiden konkav gekrümmten Abschnitte 46, 48 nicht in einer gemeinsamen Ebene mit den beiden geradlinigen Abschnitten 42, 44 angeordnet sein müssen. In anderen Ausführungsbeispielen können die konkav gekrümmten Abschnitte 46, 48, in der Draufsicht von oben betrachtet, nach innen zur Mitte hin (zur gestrichelten Linie 62 hin) stärker zulaufen oder gewölbt sein.

Auf der Oberseite weist die Schneidplatte 10 in ihrem Schneidenbereich 24 eine Spanfläche 52 auf. Über diese Spanfläche 52 fließt der abgehobene Span während des Einsatzes der Schneidplatte 10. Die Spanfläche 52 dient der Spanleitung sowie der Spanumformung. Vorzugsweise ist die Spanfläche 52 als stetige Freiformfläche ausgebildet. In dem vorliegend gezeigten Ausführungsbeispiel grenzt die Spanfläche 52 unmittelbar an die Hauptschneidkante 28 sowie die beiden Nebenschneidkanten 30, 32 an. Dies muss jedoch nicht zwangsläufig der Fall sein. Zwischen der Spanfläche 52 und den jeweiligen Schneidkanten 28, 30, 32 können auch kleinere Übergangsflächen angeordnet sein, welche nicht unmittelbar als Spanflächen fungieren müssen. Zur Ausnutzung der gesamten Breite und Länge des Schneidenbereichs 24 ist es jedoch bevorzugt, dass die Spanfläche 52 unmittelbar an die Schneidkanten 28, 30, 32 angrenzt.

Die Spanfläche 52 lässt sich in einen vorderen Bereich 54 und einen hinteren Bereich 56 unterteilen. Beide Bereiche 54, 56 gehen vorzugsweise unmittelbar und stetig ineinander über. Der vordere Bereich 54 der Spanfläche 52 wird seitlich durch die beiden geradlinigen Abschnitte 42. 44 der Nebenschneidkanten 30, 32 begrenzt. Der hintere Bereich 56 der Spanfläche 52 wird seitlich durch die beiden konkav gekrümmten Abschnitte 46, 48 der Nebenschneidkanten 30, 32 begrenzt. Der hintere Bereich 56 hat demnach einen größeren Abstand von der Hauptschneidkante 28 als der vordere Bereich 54, welcher vorzugsweise unmittelbar an die Hauptschneidkante 28 angrenzt.

Die komplex geformte Struktur der Spanfläche 52 ist in Fig. 3 mit Hilfe von mehreren Hilfslinien 58 graphisch hervorgehoben. Es versteht sich, dass diese Hilfslinien 58 in Realität nicht vorhanden sind.

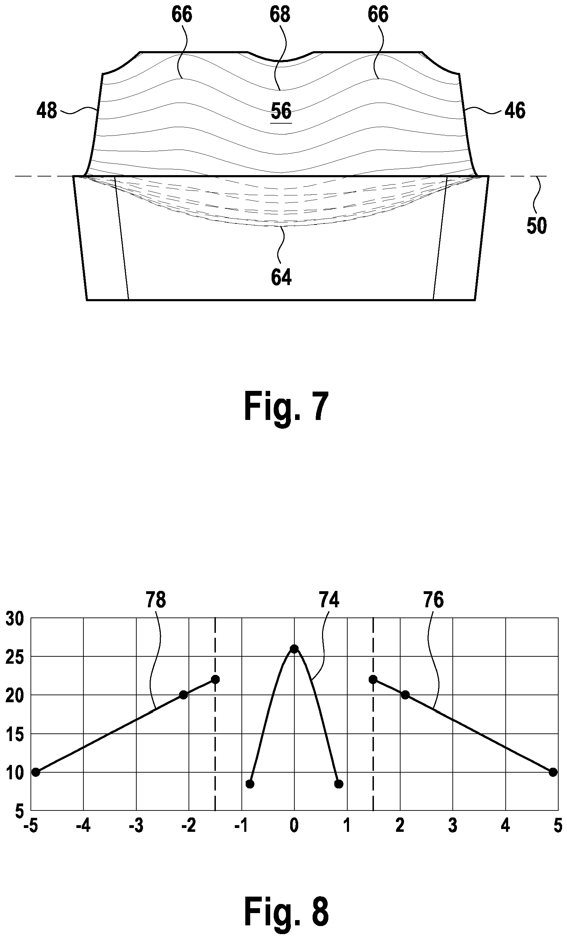

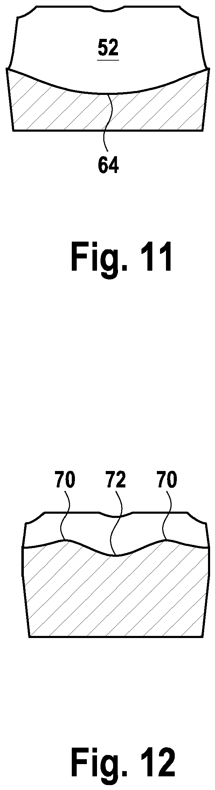

In dem vorderen Bereich 54 ist die Spanfläche 52 in Bezug auf die Schneidenebene 50 nach unten zurückgesetzt. Die Spanfläche 52 bildet in dem vorderen Bereich 54 eine muldenförmige Vertiefung. Dies ist bspw. aus Fig. 7 ersichtlich. In dem vorderen Bereich 54 weist die Spanfläche 52 in jedem Querschnitt parallel zu der Hauptschneidkante 28 einen Tiefpunkt auf, der einen gleich großen Abstand von dem ersten und dem zweiten geradlinigen Abschnitt 42, 44 der ersten bzw. zweiten Nebenschneidkante 30, 32 hat. Ein beispielhafter Querschnitt dieser Art (parallel zu der Hauptschneidkante 28) ist in Fig. 11 dargestellt. Der darin mit der Bezugsziffer 64 bezeichnete Tiefpunkt ist als tatsächliches mathematischer Tiefpunkt zu verstehen, welcher im Vergleich zu allen übrigen Punkten auf der Spanfläche 52 in diesem Querschnitt den größten Abstand von der Schneidenebene 50 hat.

Im hinteren Bereich 56 hat die Spanfläche 52 vorzugsweise eine erhabene Struktur, die über die Schneidenebene 50 nach oben hin absteht. In diesem hinteren Bereich 56 weist die Spanfläche 52 eine Spanformgeometrie auf, welche zumindest zwei Erhöhungen 66 und eine dazwischen liegende Vertiefung 68 aufweist. Dies ist in Fig. 7 wiederum anhand von Hilfslinien graphisch hervorgehoben. Genauer gesagt weist die Spanfläche 52 in dem hinteren Bereich 56 in jedem Querschnitt parallel zu der Hauptschneidkante 28 zwei Hochpunkte 70 und einen dazwischen liegenden Tiefpunkt 72 auf, wobei der Tiefpunkt 72, ähnlich wie der Tiefpunkt 64 im vorderen Bereich 54, einen gleich großen Abstand von den beiden Nebenschneidkanten 30, 32 hat. Ein solcher beispielhafter Querschnitt der Spanfläche 52 durch deren hinteren Bereich 56 ist in Fig. 12 dargestellt.

Die Erhöhungen 66 führen den Span seitlich. Wie insbesondere aus Fig. 3 und 7 ersichtlich ist, nimmt die Krümmung der Erhöhungen 66 mit zunehmendem Abstand von der Hauptschneidkante 28 zu, um diese seitliche Führung zu verbessern. Die Hochpunkte 70 sind vorzugsweise jeweils von den konkav gekrümmten Abschnitten 46, 48 der Nebenschneidkanten 30, 32 beabstandet, so dass der hintere Bereich 56 der Spanfläche 52 seitlich nach außen hin, also zu den konkav gekrümmten Abschnitten 46, 48 hin, ausgehend von den Hochpunkten 70 wieder abfällt. Es ergibt sich in jedem (weiteren) Querschnitt (im hinteren Bereich 56) eine Art wellenförmiger Querschnitt.

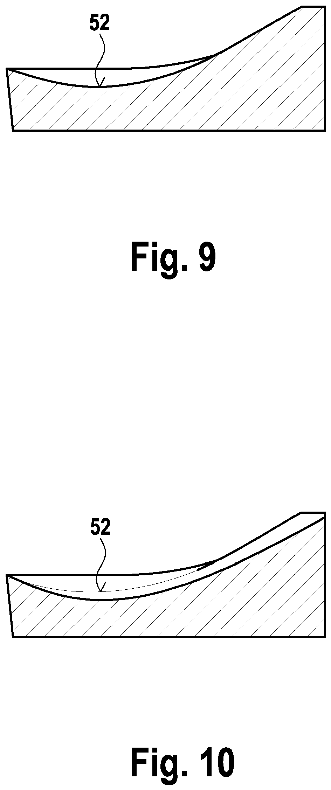

In den dazu orthogonal ausgerichteten Längsschnitten (Schnitte orthogonal zu der Hauptschneidkante 28) ist die Spanfläche 52 vorzugsweise konkav gekrümmt, und zwar sowohl im vorderen Bereich 54 wie auch im hinteren Bereich 56. Genauer gesagt ist die sich in diesen Längsschnitten ergebende Schnittlinie der Spanfläche 52 in jedem dieser parallel zueinander angeordneten Längsschnitte konkav gekrümmt. Zwei Beispiele dieser Längsschnitte sind in Fig. 9 und 10 dargestellt.

Die Spanfläche 52 ist vorzugsweise spiegelsymmetrisch zu einer Spiegelebene, welche durch den Mittelpunkt 60 der Hauptschneidkante 28 verläuft und orthogonal zu der Hauptschneidkante 28 ausgerichtet ist. Diese Spiegelebene ist in Fig. 5 als gestrichelte Linie angedeutet und mit der Bezugsziffer 62 versehen. Als Mittelpunkt 60 der Hauptschneidkante 28 wird der Punkt bezeichnet, der einen gleich großen Abstand von dem ersten Ende 34 wie auch von dem zweiten Ende 36 der Hauptschneidkante 28 besitzt.

Ein weiteres Merkmal der Schneidplatte 10 gemäß der vorliegenden Erfindung ist die Art der Ausgestaltung des Spanwinkels entlang der Schneidkanten 28, 30 und 32. Der Spanwinkel $\gamma$ welcher sich zwischen der Spanfläche 52 und der Schneidenebene 50 jeweils entlang der Schneidkanten 28, 30, 32 ergibt, variiert vorzugsweise entlang der Schneidkanten 28, 30, 32.

Ein Spanwinkel $\gamma 1$ im Mittelpunkt 60 der Hauptschneidkante 28 ist vorzugsweise größer als ein Spanwinkel $\gamma 2$ im Bereich des ersten und/oder zweiten Endes 34, 36 der Hauptschneidkante 28. Besonders bevorzugt nimmt der Spanwinkel $\gamma$ entlang der Hauptschneidkante 28 ausgehend von dem Mittelpunkt 60 nach außen hin, also zu den beiden Enden 34, 36 hin, monoton ab. Besonders bevorzugt nimmt der Spanwinkel entlang der Hauptschneidkante 28 von innen nach außen streng monoton ab.

In dem vorliegend gezeigten Ausführungsbeispiel nimmt der Betrag des Spanwinkels $\gamma$ ausgehend von der Mitte 60 der Hauptschneidkante 28 in beide Richtungen jeweils quadratisch ab. Dies ist bspw. aus dem in Fig. 8 dargestellten Schaubild ersichtlich, welches die Verteilung der Spanwinkelgröße bzw. des Spanwinkelbetrages entlang der Haupt- und Nebenschneidkanten 28, 30, 32 zeigt. In Fig. 8 ist auf der waagrechten x-Achse jeweils die Position in Bezug auf die Mitte 60 der Hauptschneidkante angegeben, wobei negative Koordinaten jeweils links der Mitte 60 liegen und positive Koordinaten jeweils rechts der Mitte 60 liegen. Auf der senkrechten $\gamma$-Achse ist jeweils der Betrag des Spanwinkels $\gamma$ aufgetragen. Die Kurve 74 gibt die Spanwinkelverteilung entlang der Hauptschneidkante 28 an. Die Kurven 76 und 78 geben entsprechend die Spanwinkelverteilung entlang der Nebenschneidkanten 30, 32 an. Demnach variiert der Spanwinkel auch entlang der beiden Nebenschneidkanten 30, 32, und zwar derart, dass der Spanwinkel (entlang der Nebenschneidkanten 30, 32 als Nebenschneidkanten-Spanwinkel $\gamma'$ bezeichnet) entlang der jeweiligen Nebenschneidkanten 30, 32 mit zunehmendem Abstand von der Hauptschneidkante 28 monoton abnimmt. In dem in Fig. 8 gezeigten Beispiel nimmt der Nebenschneidkanten-Spanwinkel $\gamma'$ sogar streng monoton und linear ab.

Es versteht sich jedoch, dass die in Fig. 8 gezeigte Spanwinkelverteilung entlang der Schneidkanten 28, 30, 32 nur eine von diversen Möglichkeiten ist. Beispielsweise kann ein Nebenschneidkanten-Spanwinkel $\gamma'1$ entlang der gesamten geradlinigen Abschnitte 42, 44 konstant sein und erst im Bereich der gekrümmten Abschnitte 46, 48 abnehmen. Wie in Fig. 8 dargestellt, kann der Nebenschneidkanten-Spanwinkel $\gamma'$ jedoch auch bereits entlang der geradlinigen Abschnitte 42, 40 der Nebenschneidkanten 30, 32 streng monoton abnehmen. Grundsätzlich ist es jedoch bevorzugt, dass ein Nebenschneidkanten-Spanwinkel $\gamma'1$ im Bereich der geradlinigen Abschnitte 42, 44 größer als ein Nebenschneidkanten-Spanwinkel $\gamma'2$ im Bereich der konkav gekrümmten Abschnitte 46, 48 ist.

Des Weiteren gelten für die Spanwinkelverteilung entlang der Hauptschneidkante 28 die folgenden Randbedingungen:

$$5° \leq \gamma 2 < \gamma 1 \leq 30°$$

$$0,8 \geq \frac{\gamma 2}{\gamma 1} \geq 0,16.$$

Ein Spanwinkel $\gamma'3$ im Bereich der Radien 38, 40 ist vorzugsweise größer oder gleich groß wie der Nebenschneidkanten-Spanwinkel $\gamma'1$ im Bereich der geradlinigen Abschnitte 42, 44 der Nebenschneidkanten 30, 32.

Vorzugsweise machen die geradlinigen Abschnitte 42, 44 maximal 50 % der Gesamtlänge der Nebenschneidkanten 30, 32 aus. Ein Punkt, an dem der erste geradlinige Abschnitt 42 der ersten Nebenschneidkante 30 in den ersten konkav gekrümmten Abschnitt 46 der Nebenschneidkante 30 übergeht, ist in Fig. 4 mit der Bezugsziffer 80 gekennzeichnet. Ein entsprechender Punkt, an dem der zweite geradlinige Abschnitt 44 der zweiten Nebenschneidkante 32 in den zweiten konkav gekrümmten Abschnitt 48 der zweiten Nebenschneidkante 32 übergeht, ist in Fig. 3 mit der Bezugsziffer 82 gekennzeichnet. Vorzugsweise haben diese Übergangspunkte 80, 82 einen gleich großen Abstand a von der Hauptschneidkante 28. Für den Abstand a gilt vorzugsweise: $0,1 \, l \leq a \leq 1 \, l$. Weiterhin vorzugsweise gilt für den Abstand a: $r \leq a \leq 10 \, r$, wobei r der Radius der Radien 38, 40 ist.

Die Spanformgeometrie der Spanfläche 52 steht im hinteren Bereich 56 bis zu einer Höhe $h$ über die Schneidenebene 50 ab, wobei für diese Höhe $h$ gilt: $0,6 * l \geq h \geq 0,1 * l$, wobei $l$ die Länge bzw. Breite der Hauptschneidkante 28 inklusive der Radien 38, 40 angibt (siehe Fig. 6).

Aus Fig. 4 und 6 sind ferner die stirnseitigen und seitlichen Freiwinkel der Schneidplatte 10 ersichtlich. Der stirnseitige Freiwinkel $\alpha_1$, welcher sich an der vorderen Stirnseite 84 der Schneidplatte 10 ergibt, ist vorzugsweise entlang der Hauptschneidkante 28 konstant. Für diesen stirnseitigen Freiwinkel $\alpha_1$ gilt vorzugsweise: $4° \leq \alpha_1 \leq 10°$, besonders bevorzugt gilt: $5° \leq \alpha_1 \leq 8°$. Auch die seitlichen Freiwinkel $\alpha_2$, welche sich an den seitlichen Flanken 86, 88 der Schneidplatte 10 ergeben, sind vorzugsweise entlang der gesamten Nebenschneidkanten 30, 32 konstant. Für die seitlichen Freiwinkel $\alpha_2$ gilt vorzugsweise: $4° \leq \alpha_2 \leq 10°$, besonders bevorzugt gilt: $5° \leq \alpha_2 \leq 8°$.

Die zuvor erläuterte und in den Figuren gezeigte Geometrie des Schneidenbereichs der Schneidplatte ermöglicht eine ideale Spanbildung und Spanformung, welche sich insbesondere für das Einstech- und Abstechdrehen von zähen Werkstoffen eignet. Besonders vorteilhaft eignet sich die erfindungsgemäße Schneidplatte zum Ein- und Abstechdrehen von Werkstoffen aus Titan oder Titanlegierungen.

Es sei darauf hingewiesen, dass die vorliegende Erfindung nicht auf die in den Zeichnungen gezeigte Gestalt der Schneidplatte beschränkt ist. Die in den Ansprüchen definierte Ausgestaltung der Spanfläche, der Haupt- und Nebenschneidkanten lässt sich grundsätzlich auch bei andersartigen Schneidplatten einsetzen, beispielsweise auch bei ein-, drei- oder mehrschneidigen Schneidplatten.

**Patentansprüche**

1. Schneidplatte (10) für ein Werkzeug (100) zur spanenden Bearbeitung eines Werkstücks, wobei die Schneidplatte (10) aufweist:

   - eine Hauptschneidkante (28), die geradlinig ausgestaltet ist und sich zwischen einem ersten Ende (34) und einem gegenüberliegenden zweiten Ende (36) erstreckt;
   - eine erste Nebenschneidkante (30), die einen ersten geradlinigen Abschnitt (42) und einen ersten konkav gekrümmten Abschnitt (46) aufweist, wobei der erste geradlinige Abschnitt (42) unmittelbar oder über einen Radius (38) oder eine Fase mit dem ersten Ende (34) der Hauptschneidkante (28) verbunden ist;
   - eine zweite Nebenschneidkante (32), die einen zweiten geradlinigen Abschnitt (44) und einen zweiten konkav gekrümmten Abschnitt (48) aufweist, wobei der zweite geradlinige Abschnitt (44) unmittelbar oder über einen Radius (40) oder eine Fase mit dem zweiten Ende (36) der Hauptschneidkante (28) verbunden ist; und
   - eine Spanfläche (52), die eine Spanformgeometrie aufweist;

   wobei die Hauptschneidkante (28), der erste geradlinige Abschnitt (42) und der zweite geradlinige Abschnitt (44) in einer gemeinsamen Schneidenebene (50) angeordnet sind,
   wobei die Hauptschneidkante (28) mit dem ersten geradlinigen Abschnitt (42) der ersten Nebenschneidkante (30) und dem zweiten geradlinigen Abschnitt (44) der zweiten Nebenschneidkante (32) jeweils einen spitzen Winkel ($\alpha$) einschließt,
   wobei die Spanfläche (52) in einem vorderen Bereich (54), der seitlich durch den ersten geradlinigen Abschnitt (42) der ersten Nebenschneidkante (30) und den zweiten geradlinigen Abschnitt (44) der zweiten Nebenschneidkante (32) begrenzt wird, in Bezug auf die Schneidenebene (50) nach unten zurückgesetzt ist und in jedem Querschnitt parallel zu der Hauptschneidkante (28) einen Tiefpunkt (64) aufweist, der einen gleich großen ersten Abstand von dem ersten geradlinigen Abschnitt (42) und dem zweiten geradlinigen Abschnitt (44) hat und im Vergleich zu den übrigen Punkten auf der Spanfläche (52) in dem jeweiligen Querschnitt einen maximalen Abstand von der Schneidenebene (50) hat,
   wobei die Spanformgeometrie zumindest in einem hinteren Bereich (56) der Spanfläche (52), der seitlich durch den ersten konkav gekrümmten Abschnitt (46) und den zweiten konkav gekrümmten Abschnitt (48) begrenzt wird, angeordnet ist und über die Schneidenebene (50) hinaus nach oben hin absteht und zumindest zwei Erhöhungen (66) aufweist, so dass die Spanfläche (52) in dem hinteren Bereich (56) in einem weiteren Querschnitt parallel zu der Hauptschneidkante (28) zwei Hochpunkte (70) und einen dazwischen liegenden zweiten Tiefpunkt (72) aufweist, der einen gleich großen dritten Abstand von dem ersten konkav gekrümmten Abschnitt (46) und dem zweiten konkav gekrümmten Abschnitt (48) hat, und
**dadurch gekennzeichnet, dass** ein Spanwinkel entlang der Hauptschneidkante (28) derart variiert, dass der Spanwinkel $\gamma 1$ an einem Mittelpunkt (60) der Hauptschneidkante (28), der einen gleich großen zweiten Abstand von dem ersten Ende (34) und dem zweiten Ende (36) der Hauptschneidkante (28) hat, größer als der Spanwinkel $\gamma 2$ im Bereich des ersten und/oder zweiten Endes (34, 36) ist.

2. Schneidplatte nach Anspruch 1, wobei der Spanwinkel $\gamma$ entlang der Hauptschneidkante (28) derart variiert, dass der Spanwinkel $\gamma$ ausgehend von dem Mittelpunkt (60) der Hauptschneidkante (28) jeweils zum ersten Ende (34) und zum zweiten Ende (36) hin monoton abnimmt.

3. Schneidplatte nach Anspruch 1 oder 2, wobei gilt: $5° \leq \gamma 2 < \gamma 1 \leq 30°$.

4. Schneidplatte nach einem der Ansprüche 1-3, wobei gilt: $0,8 \geq \dfrac{\gamma 2}{\gamma 1} \geq 0,16.$

5. Schneidplatte nach einem der Ansprüche 1-4, wobei ein Nebenschneidkanten-Spanwinkel $\gamma'$ entlang der ersten Nebenschneidkante (30) derart variiert, dass der Nebenschneidkanten-Spanwinkel $\gamma'$ entlang der ersten Nebenschneidkante (30) mit zunehmendem Abstand von der Hauptschneidkante (28) monoton abnimmt.

6. Schneidplatte nach Anspruch 5, wobei der Nebenschneidkanten-Spanwinkel $\gamma'$ entlang des ersten geradlinigen Abschnitts (42) der ersten Nebenschneidkante (30) konstant ist.

7. Schneidplatte nach einem der Ansprüche 1-6, wobei die Spanfläche (52) als stetige Freiformfläche ausgebildet ist.

8. Schneidplatte nach einem der Ansprüche 1-7, wobei die Spanfläche (52) spiegelsymmetrisch zu einer Spiegelebene (62) ist, die durch den Mittelpunkt (60) der Hauptschneidkante (28) verläuft und orthogonal zu der Hauptschneidkante (28) ausgerichtet ist.

**9.** Schneidplatte nach einem der Ansprüche 1-8, wobei die Spanfläche (52) unmittelbar an die Hauptschneidkante (28), die erste Nebenschneidkante (30) und die zweite Nebenschneidkante (32) angrenzt.

**10.** Schneidplatte nach einem der Ansprüche 1-9, wobei die Spanfläche (52) in dem gesamten hinteren Bereich (56) in Bezug auf die Schneidenebene (50) nach oben hin absteht.

**11.** Schneidplatte nach einem der Ansprüche 1-10, wobei die Spanformgeometrie der Spanfläche (52) bis zu einer Höhe *h* über die Schneidenebene (50) absteht und die Hauptschneidkante (28) eine Länge *l* aufweist, wobei gilt:

$$0{,}6 * l \geq h \geq 0{,}1 * l\,.$$

**12.** Schneidplatte nach einem der Ansprüche 1-11, wobei eine Krümmung der Erhöhungen (66) mit zunehmendem Abstand von der Hauptschneidkante (28) zunimmt.

**13.** Schneidplatte nach einem der Ansprüche 1-12, wobei ein Nebenschneidkanten-Abstand (d) zwischen dem ersten konkav gekrümmten Abschnitt (46) und dem zweiten konkav gekrümmten Abschnitt (48) mit zunehmendem Abstand von der Hauptschneidkante (28) kleiner wird.

**14.** Schneidplatte nach einem der Ansprüche 1-13, wobei die Spanfläche (52) in jedem Längsschnitt orthogonal zu der Hauptschneidkante (28) konkav ausgestaltet ist.

**15.** Schneidplatte nach einem der Ansprüche 1-14, wobei der erste konkav gekrümmte Abschnitt (46) gleich lang oder länger als der erste geradlinige Abschnitt (42) ist, und wobei der zweite konkav gekrümmte Abschnitt (48) gleich lang oder länger als der zweite geradlinige Abschnitt (44) ist.

**16.** Werkzeug (100) mit einem Werkzeughalter (12) und einer an dem Werkzeughalter (12) angeordneten Schneidplatte (10) gemäß einem der Ansprüche 1 bis 15.

**Claims**

**1.** A cutting insert (10) for a tool (100) for machining a workpiece, wherein the cutting insert (10) comprises:

- a main cutting edge (28) which is configured rectilinear and extends between a first end (34) and an opposite second end (36);

- a first minor cutting edge (30) which comprises a first rectilinear portion (42) and a first concavely curved portion (46), wherein the first rectilinear portion (42) is connected to the first end (34) of the main cutting edge (28) directly or via a radius (38) or chamfer;
- a second minor cutting edge (32) which comprises a second rectilinear portion (44) and a second concavely curved portion (48), wherein the second rectilinear portion (44) is connected to the second end (36) of the main cutting edge (28) directly or via a radius (40) or chamfer; and
- a rake face (52) which comprises a chip shaping geometry;

wherein the main cutting edge (28), the first rectilinear portion (42) and the second rectilinear portion (44) are arranged in a common cutting plane (50), wherein the main cutting edge (28) forms an acute angle ($\alpha$) with the first rectilinear portion (42) of the first minor cutting edge (30) and the second rectilinear portion (44) of the second minor cutting edge (32), respectively, wherein the rake face (52) is recessed downwardly with respect to the cutting plane (50) in a front area (54) which is laterally bounded by the first rectilinear portion (42) of the first minor cutting edge (30) and the second rectilinear portion (44) of the second minor cutting edge (32), and comprises a low point (64) in each cross-section parallel to the main cutting edge (28), which low point (64) has an equal first distance from the first rectilinear portion (42) and the second rectilinear portion (44) and has a maximum distance from the cutting plane (50) compared to all other points on the rake face (52) in the respective cross-section, wherein the chip shaping geometry is arranged at least in a rear area (56) of the rake face (52), which is laterally bounded by the first concavely curved portion (46) and the second concavely curved portion (48), and projects upwardly beyond the cutting plane (50) and comprises at least two elevations (66) so that the rake face (52) in the rear area (56) in a further cross-section parallel to the main cutting edge (28) comprises two high points (70) and an intermediate second low point (72) which has an equal third distance from the first concavely curved portion (46) and the second concavely curved portion (48), and **characterized in that** a rake angle varies along the main cutting edge (28) such that the rake angle $\gamma1$ at a center (60) of the main cutting edge (28), which has an equal second distance from the first end (34) and the second end (36) of the main cutting edge (28), is greater than the rake angle $\gamma2$ in the area of the first and/or second end (34, 36).

**2.** The cutting insert according to claim 1, wherein the rake angle $\gamma$ varies along the main cutting edge (28) such that the rake angle $\gamma$ decreases monotonically from the center (60) of the main cutting edge (28) toward each of the first end (34) and the second end (36).

3. The cutting insert according to claim 1 or 2, wherein: $5° \leq \gamma2 < \gamma1 \leq 30°$.

4. The cutting insert according to any one of claims 1-3, wherein:
$$0,8 \geq \frac{\gamma2}{\gamma1} \geq 0,16.$$

5. The cutting insert according to any one of claims 1-4, wherein a minor cutting edge rake angle $\gamma'$ along the first minor cutting edge (30) varies such that the minor cutting edge rake angle $\gamma'$ monotonically decreases along the first minor cutting edge (30) with increasing distance from the main cutting edge (28).

6. The cutting insert according to claim 5, wherein the minor cutting edge rake angle $\gamma'$ is constant along the first rectilinear portion (42) of the first minor cutting edge (30).

7. The cutting insert according to any one of claims 1-6, wherein the rake face (52) is configured as a continuous free-form surface.

8. The cutting insert according to any one of claims 1-7, wherein the rake face (52) is mirror symmetrical to a mirror plane (62) passing through the center (60) of the main cutting edge (28) and oriented orthogonally to the main cutting edge (28).

9. The cutting insert according to any one of claims 1-8, wherein the rake face (52) is directly adjacent to the main cutting edge (28), the first minor cutting edge (30), and the second minor cutting edge (32).

10. The cutting insert according to any one of claims 1-9, wherein the rake face (52) projects upwardly throughout the rear portion (56) with respect to the cutting plane (50).

11. The cutting insert according to any one of claims 1-10, wherein the chip shaping geometry of the rake face (52) projects to a height $h$ above the cutting plane (50) and the main cutting edge (28) has a length $l$, wherein:

$$0,6 * l \geq h \geq 0,1 * l .$$

12. The cutting insert according to any one of claims 1-11, wherein a curvature of the elevations (66) increases with increasing distance from the main cutting edge (28).

13. The cutting insert according to any one of claims 1-12, wherein a minor cutting edge distance (d) between the first concavely curved portion (46) and the second concavely curved portion (48) decreases with increasing distance from the main cutting edge (28).

14. The cutting insert according to any one of claims 1-13, wherein the rake face (52) is concave in any longitudinal section orthogonal to the main cutting edge (28).

15. The cutting insert according to any one of claims 1-14, wherein the first concavely curved portion (46) is equal to or longer than the first rectilinear portion (42), and wherein the second concavely curved portion (48) is equal to or longer than the second rectilinear portion (44).

16. A tool (100) comprising a tool holder (12) and a cutting insert (10) according to any one of claims 1 to 15 arranged on the tool holder (12).

**Revendications**

1. Plaquette de coupe (10) pour un outil (100) d'usinage d'une pièce par enlèvement de copeaux, la plaquette de coupe (10) comprenant :

   - une arête de coupe principale (28) qui est configurée de manière rectiligne et s'étend entre une première extrémité (34) et une deuxième extrémité (36) opposée ;
   - une première arête de coupe auxiliaire (30) qui comprend une première partie rectiligne (42) et une première partie (46) de courbure concave, la première partie rectiligne (42) étant reliée directement ou par le biais d'un rayon (38) ou d'un chanfrein à la première extrémité (34) de l'arête de coupe principale (28) ;
   - une deuxième arête de coupe auxiliaire (32) qui comprend une deuxième partie rectiligne (44) et une deuxième partie (48) de courbure concave, la deuxième partie rectiligne (44) étant reliée directement ou par le biais d'un rayon (40) ou d'un chanfrein à la deuxième extrémité (36) de l'arête de coupe principale (28) ; et
   - une face de coupe (52) qui comprend une géométrie de formation de copeaux ;

   l'arête de coupe principale (28), la première partie rectiligne (42) et la deuxième partie rectiligne (44) étant disposées dans un plan de coupe (50) commun,
   l'arête de coupe principale (28) formant respectivement avec la première partie rectiligne (42) de la première arête de coupe auxiliaire (30) et avec la deuxième partie rectiligne (44) de la deuxième arête de coupe auxiliaire (32) un angle aigu (α), la face de coupe (52) étant en retrait vers le bas par rapport au plan de coupe (50) dans une région avant (54) qui est limitée latéralement par la première partie rectiligne (42) de la première arête de coupe auxiliaire (30) et la deuxième partie rectiligne (44) de la deuxième arête de coupe auxiliaire (32) et présentant un point bas (64) dans chaque section transversale parallèle à l'arête de coupe principale (28), lequel point bas présente une première distance de même grandeur par rapport à la première partie rectiligne (42) et à la deuxième partie rectiligne (44) et présente par comparaison avec les autres points sur la face coupe (52) dans la section transversale respective une distance maximale par rapport au plan de coupe (50), la géométrie de formation de copeaux étant disposée au moins dans une région arrière (56) de la face de coupe (52) qui est limitée latéralement par la première partie (46) de courbure concave et la deuxième partie (48) de courbure concave, et faisant saillie vers le haut au-delà du plan de coupe (50) et comprenant au moins deux reliefs (66), de sorte que la face de coupe (52) comprend dans la région arrière (56) dans une autre section transversale parallèle à l'arête de coupe principale (28) deux points hauts (70) et un deuxième point bas (72) situé entre ceux-ci, lequel deuxième point bas présente une troisième distance de même grandeur par rapport à la première partie (46) de courbure concave et à la deuxième partie (48) de courbure concave, et **caractérisée en ce qu'**un angle de coupe varie le long de l'arête de coupe principale (28) de telle sorte que l'angle de coupe γ1 en un point central (60) de l'arête de coupe principale (28), qui présente une deuxième distance de même grandeur par rapport à la première extrémité (34) et à la deuxième extrémité (36) de l'arête de coupe principale (28), est supérieur à l'angle de coupe γ2 dans la région de la première et/ou de la deuxième extrémité (34, 36).

2. Plaquette de coupe selon la revendication 1, l'angle de coupe γ variant le long de l'arête de coupe principale (28) de telle sorte que l'angle de coupe γ diminue de manière monotone à partir du point central (60) de l'arête de coupe principale (28) respectivement jusqu'à la première extrémité (34) et jusqu'à la deuxième extrémité (36).

3. Plaquette de coupe selon la revendication 1 ou 2, avec : 5° ≤ γ2 < γ1 ≤ 30°.

4. Plaquette de coupe selon l'une des revendications 1 à 3, avec :
$$0,8 \geq \frac{\gamma2}{\gamma1} \geq 0,16.$$

5. Plaquette de coupe selon l'une des revendications 1 à 4, un angle de coupe d'arête de coupe auxiliaire γ' variant le long de la première arête de coupe auxiliaire (30) de telle sorte que l'angle de coupe d'arête de coupe auxiliaire γ' diminue de manière monotone le long de la première arête de coupe auxiliaire (30) au fur et à mesure que la distance par rapport à l'arête de coupe principale (28) augmente.

6. Plaquette de coupe selon la revendication 5, l'angle de coupe d'arête de coupe auxiliaire γ' étant constant le long de la première partie rectiligne (42) de la première arête de coupe auxiliaire (30).

7. Plaquette de coupe selon l'une des revendications 1 à 6, la face de coupe (52) étant réalisée comme face de forme libre continue.

8. Plaquette de coupe selon l'une des revendications 1 à 7, la face de coupe (52) présentant une symétrie miroir par rapport à un plan de symétrie (62) qui passe par le point central (60) de l'arête de coupe principale (28) et est orienté perpendiculairement à l'arête de coupe principale (28).

9. Plaquette de coupe selon l'une des revendications 1 à 8, la face de coupe (52) étant immédiatement adjacente à l'arête de coupe principale (28), la première arête de coupe auxiliaire (30) et la deuxième arête de coupe auxiliaire (32).

10. Plaquette de coupe selon l'une des revendications 1 à 9, la face de coupe (52) faisant saillie vers le haut par rapport au plan de coupe (50) dans toute la région arrière (56).

11. Plaquette de coupe selon l'une des revendications 1 à 10, la géométrie de formation de copeaux de la face de coupe (52) faisant saillie au-delà du plan de coupe (50) jusqu'à une hauteur h et l'arête de coupe principale (28) présentant une longueur l, avec :

$$0,6 * l \geq h \geq 0,1 * l.$$

12. Plaquette de coupe selon l'une des revendications 1 à 11, une courbure des reliefs (66) augmentant au fur et à mesure que la distance par rapport à l'arête de coupe principale (28) augmente.

13. Plaquette de coupe selon l'une des revendications 1 à 12, une distance d'arête de coupe auxiliaire (d) entre la première partie (46) de courbure concave et la deuxième partie (48) de courbure concave augmentant au fur et à mesure que la distance par rapport à l'arête de coupe principale (28) diminue.

14. Plaquette de coupe selon l'une des revendications 1 à 13, la face de coupe (52) étant de configuration concave dans chaque coupe longitudinale perpendiculaire à l'arête de coupe principale (28).

15. Plaquette de coupe selon l'une des revendications 1 à 14, la première partie (46) de courbure concave étant de même longueur ou plus longue que la première partie rectiligne (42), et la deuxième partie (48) de courbure concave étant de même longueur ou plus longue que la deuxième partie rectiligne (44).

16. Outil (100) comportant un porte-outil (12) et une plaquette de coupe (10) selon l'une des revendications 1 à 15 disposée sur le porte-outil (12).

Fig. 1

Fig. 2

**Fig. 3**

**Fig. 4**

**Fig. 5**

**Fig. 6**

# Fig. 7

# Fig. 8

52

Fig. 9

52

Fig. 10

52

64

# Fig. 11

70    72    70

# Fig. 12

**IN DER BESCHREIBUNG AUFGEFÜHRTE DOKUMENTE**

**In der Beschreibung aufgeführte Patentdokumente**

- EP 3045242 A1
- DE 102011016148 A1
- DE 102017103520 A1